# EUROPEAN PATENT APPLICATION

(11) **EP 4 589 593 A1**
(43) Date of publication of application: **23.07.2025**
(21) Application number: 25152030.0
(22) Date of filing: 15.01.2025
(51) Int. Cl.: G11C 13/04, G06N 10/40, G11B 7/0045, G11B 7/005, H04L 9/08

(54) **SECURE SOLID-STATE QUANTUM STORAGE DEVICES**

(30) Priority: 16.01.2024 US 202463621415 P; 10.01.2025 US 202519016704
(71) Applicant: II-VI Delaware, Inc., Wilmington, DE 19890 (US)
(72) Inventor: CHEN, Young-Kai, Wilmington, 19890 (US); SOUZIS, Andrew, Wilmington, 19890 (US); ENG, Julie, Wilmington, 19890 (US); KAHN, Sohail, Wilmington, 19890 (US); BARBAROSSA, Giovanni, Wilmington, 19890 (US); CHAKRABARTI, Utpal, Wilmington, 19890 (US); MATTERA, Vincent, Wilmington, 19890 (US); MICHEL, Erick, Wilmington, 19890 (US); TATARCZAK, Anna, Wilmington, 19890 (US)
(74) Representative: Schmidt, Christian

(57) **Abstract**

This disclosure describes a system and method for producing and reading a secure solid-state quantum storage device. The system comprises an illumination source and a detection system. The illumination source provides an excitation light to a quantum memory array. The detection system detects an emitted light from the quantum memory array. The emitted light corresponds to a plurality of quantum bits stored in the quantum memory array.

## Description

### CROSS REFERENCE TO RELATED APPLICATIONS

This application is a Non-Provisional Patent Application of U.S. Provisional Patent Application No. 63/621,415 entitled "SECURE SOLID-STATE QUANTUM STORAGE DEVICES" filed January 16, 2024, which is herein incorporated by reference in its entirety.

### BACKGROUND

Limitations and disadvantages of traditional storage devices will become apparent to one of skill in the art, through comparison of such approaches with some aspects of the present method and system set forth in the remainder of this disclosure with reference to the drawings.

### BRIEF SUMMARY

Systems and methods are provided for producing and reading a secure solid-state quantum storage device, substantially as illustrated by and/or described in connection with at least one of the figures, as set forth more completely in the claims.

### BRIEF DESCRIPTION OF THE DRAWINGS

FIG. 1 illustrates a top view of an example wafer implanted with a quantum memory array, in accordance with various example implementations of this disclosure.
FIG. 2 illustrates a side view of an example wafer implanted with a quantum memory array, in accordance with various example implementations of this disclosure.
FIG. 3 illustrates an example process flow for fabricating a quantum memory array, in accordance with various example implementations of this disclosure.
FIG. 4 illustrates an example of ion implantation in a quantum memory array, in accordance with various example implementations of this disclosure.
FIG. 5 illustrates an example quantum memory array readout system with a micro-LED illuminator array and 2D imager, in accordance with various example implementations of this disclosure.
FIG. 6 illustrates an example quantum memory array readout system with a holographic excitation source, in accordance with various example implementations of this disclosure.
FIG. 7 illustrates an example quantum memory array readout system with front and back illumination and a 3D holographic position mapper, in accordance with various example implementations of this disclosure.
FIG. 8 illustrates details of an example secure decoder, in accordance with various example implementations of this disclosure.

### DETAILED DESCRIPTION

This disclosure describes the processes of artificial creation and detection of defects in a substrate. These processes enable the encoding, storing, and decoding of data via a quantum memory array. The creation of defects is achieved by high energy ion implantation or by high power focused short optical pulses. Quantum memory may employ ultra-wide bandgap semiconductors (UWBGS), such as silicon carbide (SiC), gallium nitride (GaN), gallium oxide (GaO), boron nitride (BN) or diamond.

Quantum memory utilizes color centers (atomic point defects in UWBGS materials) to store stable quantum states, even in harsh environments. SiC offers advantages such as larger wafer sizes and lower native defect densities compared to other materials.

The disclosed quantum memory systems encode information, enabling secure, high-density storage. Quantum bits are embedded in prescribed color centers arranged in a 2D grid with multiple depth levels, facilitating advanced encoding methods.

The quantum memory array may be integrated with a quantum computing system, where the quantum memory array comprises a plurality of quantum color centers that are aligned with a qubit processor.

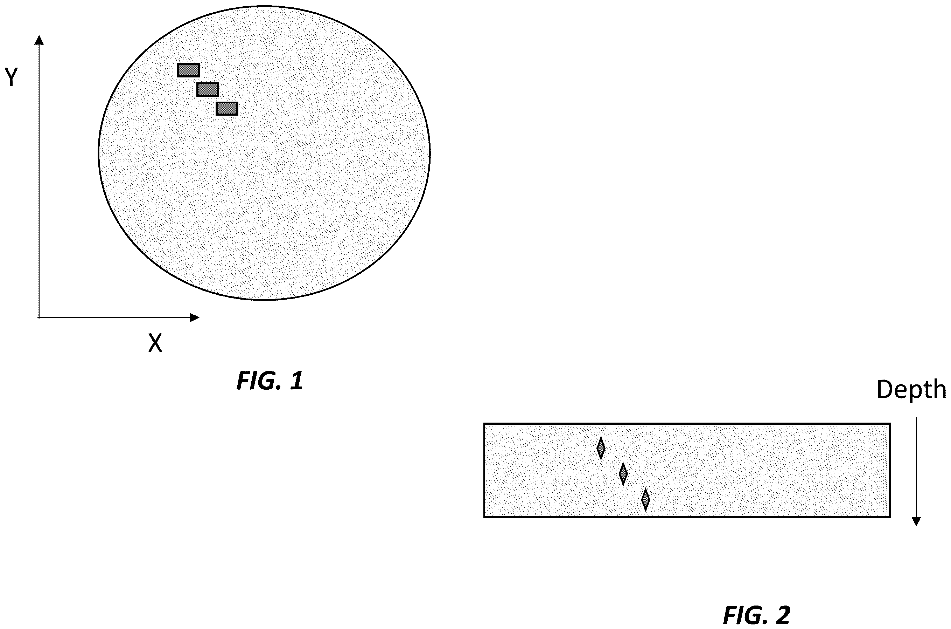

Figs. 1 and 2 depict the structure of UWBGS wafers and the arrangement of quantum bits in a multi-level grid. These diagrams provide insight into the material properties and encoding configurations. FIG. 1 shows a top view of a wafer with a 2D quantum memory array. FIG. 2 provides a side view, illustrating depth-level encoding within the array.

### Encoding

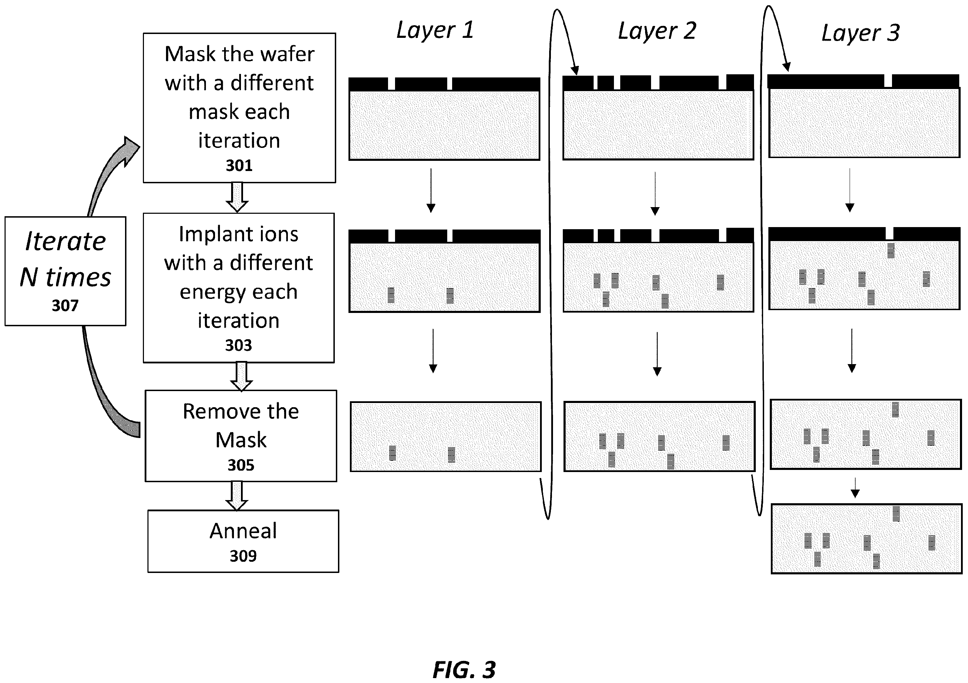

FIG. 3 illustrates an example process flow for fabricating a quantum memory array, in accordance with various example implementations of this disclosure. This wafer level fabrication process may enable high areal density quantum storage by secured encoding and printing.

FIG. 3 also comprises examples of the ion implantation process, highlighting the role of photomasks, depth-specific implantation, and the annealing process. The writing process may also utilize a high power pulse laser of programmable depth focus in the wafer with or without photomasks. These diagrams emphasize the precision required for encoding.

The wafer may be SiC, diamond or another similar material. At 301, an optical metal mask is deposited on the wafer. The mask provides the spatial distribution as illustrated, for example, in FIG. 1. The masks are delineated with encoded, secured information. Multiple patterned masks may be used to transfer information at different depths into the memory array.

At 303, ions are implanted in the wafer to generate detectable defects. Helium (He) may be used for implantation into SiC. Other ions, such as hydrogen (H+) and nitrogen (N+), or atomic color center impurities such as vanadium (Va), may also be used, depending on the desired defect structure and properties of the resulting color center.

Different ion energy levels may generate defects at different levels. Each iteration of 303 uses a different energy to provide the depth coordinates, as illustrated, for example, in FIG. 2. For example, 303 may be repeated to generate a layer-by-layer formation of N-layers of pixels. On the right of FIG. 3, an example of the ion implantation process is illustrated with N=3. These pixels may be data-coded quantum bits associated with a security key. Defects may be created through an ion-implantation process at multiple locations across a wafer in x and y dimensions at the same time. Multiple masks may be generated and aligned with each other at sub-micron resolution for ultra-high aerial density. Multi-level implantation of different ion implantation energies may be used to generate defects at pre-defined locations and depths. A combination of multiple masked implantations may provide a grayscale encoding at designated area locations.

At 305, the mask is removed from the implanted wafer. After N iterations of 301, 303, and 305, annealing at 307 finalizes the multi-level quantum memory, solidifying the encoded data.

Secure encoding is achieved by encrypting data within storage pixels and distributing bits across multiple depths and locations. Advanced coding processes may be used to scatter binary data into encrypted formats.

Additional methods, such as high-energy radiation or impurity implantation, may enhance the creation of color centers. Parameters like ion energy and ion dosage may influence the depth, emission brightness and emission wavelength from the prescribed color centers, ensuring high stability and resistance to external interference. The following table provides example ion implantation energies and dosages that may be used with He ions:

**Table 1. Example Ion Implantation Energies and Dosages**

| **Ions** | **Energy (keV)** | **Dose (#/cm²)** | **Lateral Spread 2 sigma (A)** |
|---|---|---|---|
| He | 10 | 1 × 10¹³ | 440 |
| | 10 | 5 × 10¹³ | 440 |
| | 25 | 1 × 10¹³ | 760 |
| | 25 | 5 × 10¹³ | 760 |
| | 50 | 1 × 10¹⁴ | 1000 |

The implantation process results in a damage profile with lateral spread. Pixel placement may be determined by ion energy and dosage, ensuring adequate separation to avoid signal overlap.

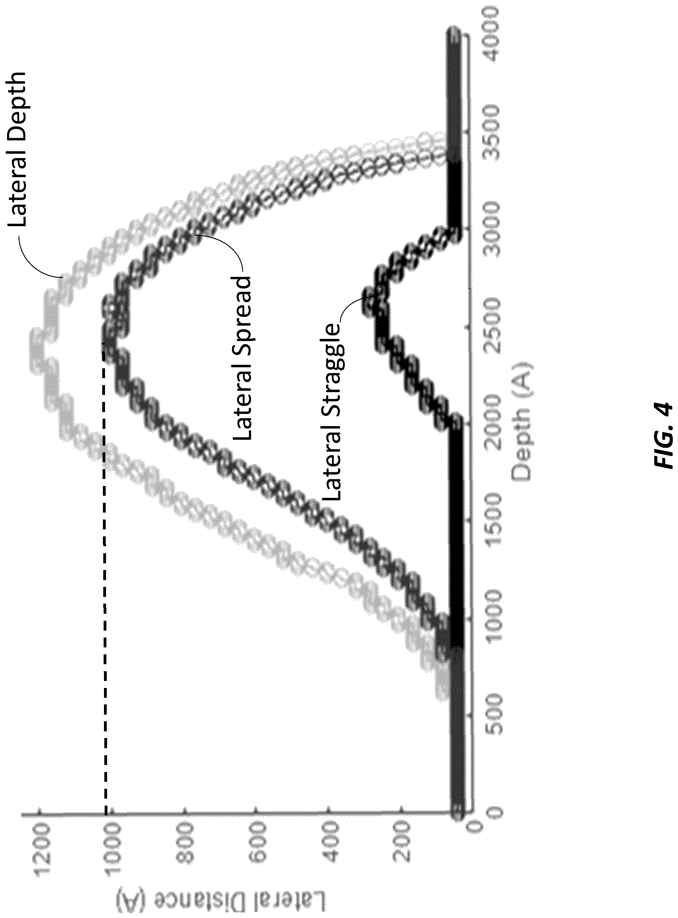

FIG. 4 illustrates an example of the lateral depth, lateral spread, and lateral straggle of He ion implantation in a quantum memory array, in accordance with various example implementations of this disclosure. FIG. 4 models a 50 keV energy level and a dosage of 1 × 10¹⁴ per cm².

When ions are implanted into a crystal, they decelerate until they reach a specific depth and then stop, creating a damage profile resembling a Gaussian curve.

At the peak of high intensity, the dosage may spread, for example, over a range of 1,000 to 3,000 angstroms. This motion of ions parallel to the wafer surface as a result of ion implantation is illustrated by the lateral straggle curve. The lateral depth and lateral spread curves represent other depths.

Despite potential smearing from neighboring pixels, slight differences in intensity enable information recovery using advanced encoding and decoding techniques. However, the maximum feature density may be constrained by the lateral spread, which depends on ion energy. For example, this may result in a 100-nanometer zone for each straggle, with a pitch of approximately 200 nanometers between two features. This spacing may define the maximum density for imprints and enable reading color centers at a high level of precision.

In addition to the precision and accuracy available via ion implantation, this disclosure also enables resistance to tampering through encryption techniques. Instead of merely creating a color center for each bit of data, encryption spreads data across multiple locations and depths.

For example, when preparing the photomask, original binary data (e.g., "0" or "1") may be encrypted using a key to shuffle or stretch the data bits and allocate them across various locations, depths and colors. This ensures that only authorized users with the correct detection color filter and decryption key can access and reconstruct the data, enhancing security and robustness in quantum memory applications.

An encoder may encrypt incoming data, generate spatially-coded implant masks, and control the corresponding energy and dosage of an ion implanter. When different color center impurities are implanted, specific wavelengths of excitation light and associated detection color filters may be required to excite and observe the prescribed quantum transitions. The encoded data may be transferred and printed onto a photomask. The pattern of the photomask may be transferred and delineated into a hard implantation mask on the surface of a semiconductor substrate where the implantation mask may allow ions or pulse laser light to pass through open pixel locations to create color centers while blocking the non-storage area. Different masks may be overlaid on each other to provide different implantation depth at different locations.

### Decoding

Decoding quantum memory relies on optical excitation to retrieve data from the plurality of color centers. Excitation with specific wavelengths triggers light emission, enabling the readout of stored information. The luminescence rate of color centers may be less than ten nanoseconds, allowing for rapid data retrieval. The detection system(s) may be configured to detect emitted light from pixels of the quantum memory array, and the emitted light may be decoded into a plurality of quantum bits.

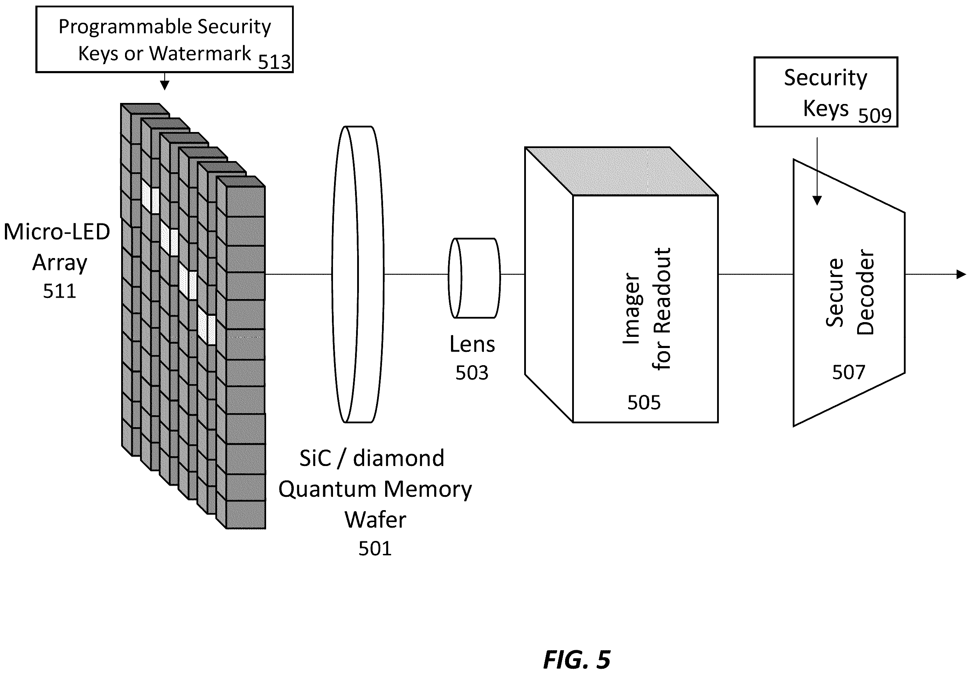

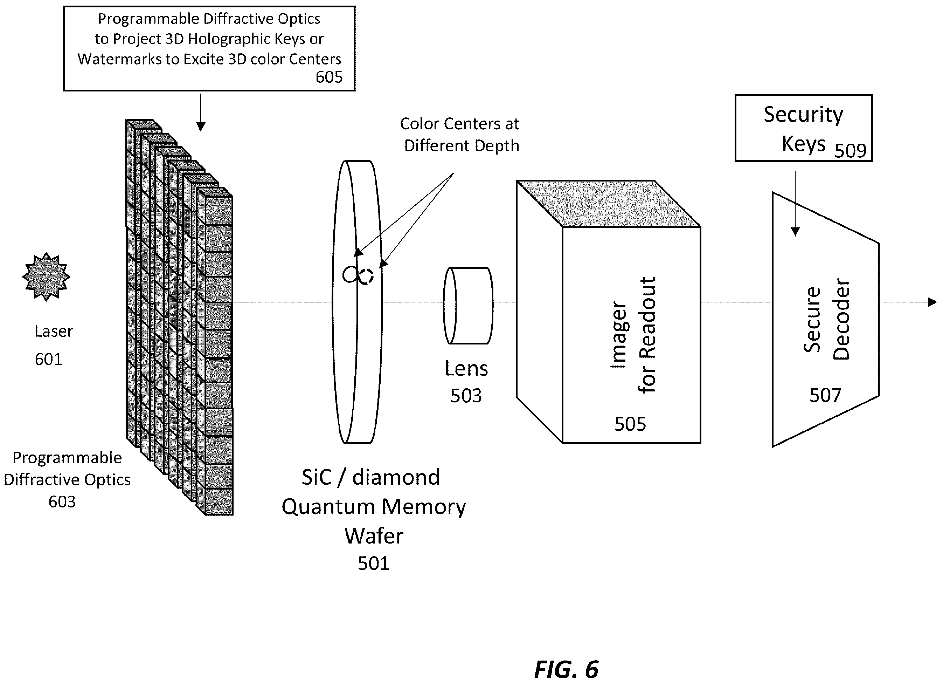

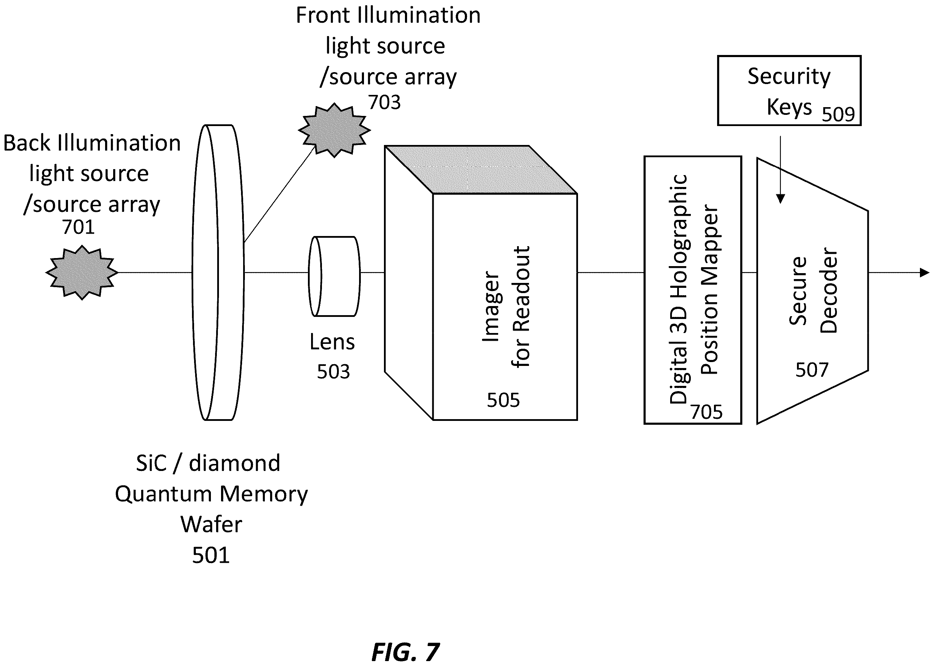

FIG. 5 illustrates an example quantum memory array readout system with a micro-LED illuminator array and 2D imager, in accordance with various example implementations of this disclosure. The wavelength of the illuminating light source may excite the color centers from ground state to the excited quantum states. The wavelengths of color filters and detectors may detect the unique emission light of the prescribed color centers, for example, using 781 nm exciting light and a 940-950 nm detector to readout written He-implanted SiC color centers. FIG. 6 illustrates an example quantum memory array readout system with a holographic excitation source, in accordance with various example implementations of this disclosure. FIG. 7 illustrates an example quantum memory array readout system with front and back illumination and a 3D holographic position mapper, in accordance with various example implementations of this disclosure.

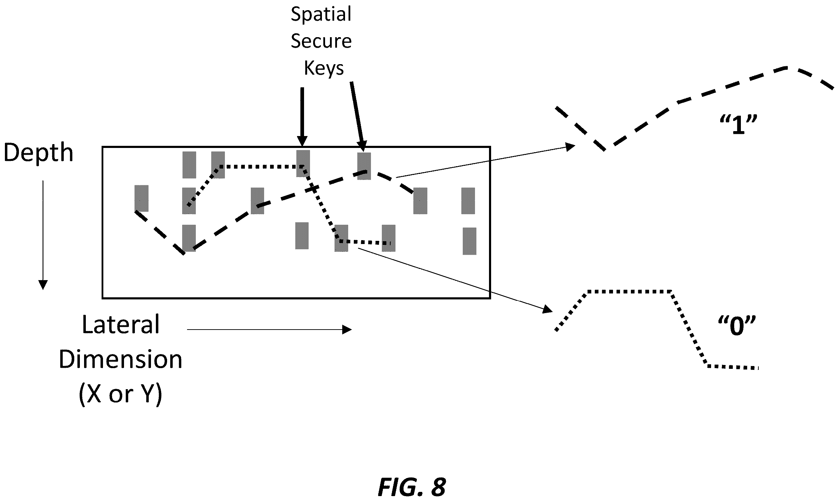

Each of the readout systems in Figs. 5-7 is illustrated with a quantum memory wafer 501. Each of the readout systems in Figs. 5-7 comprise a unique illumination source (described in more detail below with respect to each figure), a lens 503, an imager 505, a secure decoder 507, and security keys 509. FIG. 8 illustrates details of an example secure decoder 507, in accordance with various example implementations of this disclosure. To enhance security and storage density, multiple types of color centers may be written into a wafer. The detection of multiple types of color centers may require different excitation light sources, color filters, and/or detectors to readout the data stored in each kind of color centers to assemble and compile information together.

The readout systems in Figs. 5-7 may use serial scanning to pick up excited quantum bits. Serial scanning may comprise sequential reading heads to address each memory pixel (one by one), similar to a CD ROM, with a synchronized mechanical rotating substrate to readout stored bits in an x-y dimension.

The lens 503 and the imager 505 (e.g., a CMOS camera) may be used to record the emitted light of a memory array in the focusing area. The secure decoder 507 may use a direct 2D secure readout or a digital 3D holographic secure readout. With a direct 2D secure readout, the secure decoder 507 may decode the intensity of 2D emitted light from an x-y array using security keys 509, as shown in FIG. 8.

With a digital 3D holographic secure readout, the secure decoder 507 may first retrieve the 3D holographically-stored information from the 2D locations with corresponding intensities. The secure decoder 507 may then map the data into the 3D defect locations. The temporal secured position-coded data may be decoded into the original information with the security keys 509. This allows an encoding and decoding of secure information via spatially distributed programmed defects over various x-y and depth locations.

The illumination source may be configured to provide an excitation light to a quantum memory array of the quantum memory wafer 501. The illumination source may be, for example, a laser, a light emitting diode (LED), or a micro-LED array. The illumination source may be a pulsed source or a continuous wave (CW) source.

In FIG. 5, the illumination source comprises a micro-LED array 511 and programmable security elements 513, such as one or more keys or watermarks.

In FIG. 6, the illumination source comprises a laser 601, programmable diffractive optics 603, and programmable security elements 605. The programmable diffractive optics 603 may be configured via the programmable security elements 605 to project 3D holographic keys and/or watermarks capable of exciting 3D color centers (e.g., at different depths).

The programmable diffractive optics 603 may comprise a planar multilayer optical waveguide having a plurality of layers. The planar multilayer optical waveguide may be configured to direct the excitation light and collect the emitted light. The planar multilayer optical waveguide may also be directly deposited on the quantum memory array 501.

In FIG. 7, the illumination source comprises a back illumination light source (or source array) 701 and a front illumination light source (or source array) 703, to provide energy above and below the wafer 501. The exciting light may be a constant wave (CW), pulsed with codes or pulsed without codes. The illumination may be provided to the front 703 or backside 701 of the substrate or to the edges with distribution waveguides. The illumination source (701 and/or 703) may comprise a 2D addressable micro-LED or a laser array that matches the memory pixel layout. Pixels may be illuminated one-by-one or multiple pixels at a time. A single illumination source (701 and/or 703) may be split into two or more beams.

The emitted lights from the written 3D quantum defects may be detected by an intensity-based digital holographic position mapper 705. The digital holographic position mapper 705 may store the x-y location and intensity of detected lights in a data buffer.

The readout process may occur sequentially or in parallel using an imaging array. High-performance CMOS imagers may operate at, for example, 100 million frames per second and achieve readout rates of up to 1 petabit per second. Parallel detection and optimized decoder electronics may enhance aggregate readout rates, mitigating potential speed limitations.

Quantum memory systems may be designed primarily for read-only purposes, with decay times ranging from nanoseconds to microseconds. These properties ensure reliable data retrieval with minimal decay-related issues. Coding overhead may slightly reduce readout rates, but the high-speed capabilities of quantum memory remain unmatched.

The maximum memory density depends on the size of each pixel. The physical size of each pixel may be limited by the dimensions of lithographic processes of implantation masks as well as the lateral straggle (spread) of implanted ions (e.g. 100nm at 50keV), which may yield a pixel size in the order of 0.35 micron by 0.35 micron. The pixel size may be further reduced to, for example, 0.2 microns × 0.2 microns by applying error correction codes.

Planar multilayer optical waveguide layers may be deposited on the wafer in the x-y plane. Grating couplers may be incorporated at the waveguide crossings to inject and readout the light vertically. With optical switches at the input of the x and y waveguides, each pixel may be addressed separately. A 2D liquid crystal on silicon (LCOS) switch with individually addressable pixels may be used to selectively read out light from corresponding memory bits in the array.

The light intensity and holographic patterns may be calibrated and self-adjusted against a set of prescribed coded patterns on the wafers before detection and decoding.

For sequential readout and decoding of sequentially encoded information, the security may be embedded and spread over several sequential bits. The sequential readout system may read and capture the necessary length of read bits before decoding. This may provide error correction coding by incorporating several overhead bits.

With a micro-LED array aligned to the quantum color center storage array, a pixel-by-pixel, specific turn-on pattern of a 2D micro-LED array may accumulate an intensity from the overlaid 3D color centers. A holographic emitter may illuminate the 3D color center array and excite individually addressed pixels at prescribed depths to access depth information. Tunable exciting light source, color filters and broadband detectors are able to extract information stored among mixed types of color centers.

The detection system may be configured to resolve the wavelength and/or the polarization of the emitted light. The detection system may be configured according to a machine learning algorithm to resolve overlapping signals of the emitted light.

The detection system may comprise an optical isolator or a spread coder to mitigate signal overlap between adjacent pixels. The optical isolator or coder may comprise a multi-layered interference filter and/or a spatial light modulator to dynamically adjust the emitted light density and locations.

The detection system may comprise a data reconstruction module calibrated for variations in pixel intensity caused by differences in implantation depth. Various frequency components of the emitted lights from different types of color centers may be aggregated and decrypted by data processing. Nonlinearities in the emitted light signals may be compensated for using polynomial regression.

The readout systems described herein may operate at room temperature. When integrated with qubit quantum detectors, cooled photodetectors may also be used.

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. Therefore, it is intended that the present method and/or system not be limited to the particular implementations disclosed, but that the present method and/or system will include all implementations falling within the scope of the appended claims.

## Claims

1. A system, the system comprising:
an illumination source configured to provide an excitation light to a quantum memory array; and
a detection system configured to detect an emitted light from the quantum memory array, wherein the emitted light corresponds to a plurality of quantum bits stored in the quantum memory array.

2. The system of claim 1, wherein:
the quantum memory array comprises a plurality of pixels, and
each pixel of the plurality of pixels is associated with a pixel size that is determined according to an ion implantation energy and an ion dosage.

3. The system of claim 1, wherein:
the excitation light comprises one or more wavelengths, and
each of the one or more wavelengths corresponds to a different type of color center.

4. The system of claim 1, wherein the illumination source is one of a laser, a light emitting diode (LED), and a micro-LED array.

5. The system of claim 1, wherein the illumination source is one of a pulsed source and a continuous wave source.

6. The system of claim 1, wherein:
the illumination source is configured to provide the excitation light below a transparent substrate.

7. The system of claim 1, wherein:
the system comprises a planar multilayer optical waveguide comprising a plurality of layers deposited on the quantum memory array, and
the planar multilayer optical waveguide is configured to direct the excitation light and collect the emitted light.

8. The system of claim 1, wherein: the excitation light corresponds to a watermark.

9. The system of claim 1, wherein:
the detection system comprises a secure decoder,
the plurality of quantum bits are obfuscated by a spreading across the quantum memory array, and
the secure decoder is configured, according to one or more encryption keys, to decode the plurality of quantum bits according to a spatial distribution and an intensity of the emitted light.

10. The system of claim 9, wherein:
the secure decoder is configured according to one or both of a 2D readout and a 3D holographic readout.

11. The system of claim 1, wherein:
the quantum memory array comprises a plurality of pixels, and
each pixel of the plurality of pixels is associated with a pixel size that is determined according to an intensity and a focal depth of a high energy pulse laser.

12. The system of claim 1, wherein:
the detection system comprises one or both of a 2D imager and a CMOS camera.

13. The system of claim 1, wherein:
the detection system is configured to resolve one or both of a wavelength and a polarization of the emitted light.

14. The system of claim 1, wherein:
the detection system is configured according to a machine learning algorithm to resolve overlapping and/or obfuscated signals of the emitted light.

15. The system of claim 14, wherein:
the machine learning algorithm is configured according to a security key.

16. The system of claim 1, wherein:
the quantum memory array comprises a plurality of pixels, and
the detection system comprises an optical isolator configured to mitigate signal overlap associated with adjacent pixels of the plurality of pixels.

17. The system of claim 16, wherein:
the optical isolator comprises a coder with a spatial light modulator configured to dynamically adjust the emitted light.

18. The system of claim 16, wherein:
the optical isolator comprises a multi-layered interference filter.

19. The system of claim 1, wherein:
the quantum memory array comprises a plurality of pixels, and
the detection system comprises a data reconstruction module that is calibrated for variations in pixel intensity and wavelength.

20. The system of claim 1, wherein:
the detection system is configured to correct for nonlinearities in the emitted light signals using polynomial regression.
